# EUROPÄISCHE PATENTSCHRIFT

(11) **EP 1 416 216 B1**
(45) Veröffentlichungstag und Bekanntmachung des Hinweises auf die Patenterteilung: **27.12.2006**
(21) Anmeldenummer: 03019955.8
(22) Anmeldetag: 03.09.2003
(51) Int. Cl.: F16L 59/14, F16L 9/147, F16L 59/16

(54) **Isoliertes Leitungsrohr für den Einsatz in Sanitär- und Heizungsanlagen**
Insulated pipe for use in sanitary and heating installation
Tuyau isolé pour l'utilisation dans une installation sanitaire et de chauffage

(30) Priorität: 24.10.2002 DE 10249454
(43) Veröffentlichungstag der Anmeldung: 06.05.2004
(73) Patentinhaber: WIELAND-WERKE AG, 89070 Ulm (DE)
(72) Erfinder: Werner, Rolf, 89278 Nersingen (DE); Zanker, Max, 89257 Illertissen (DE); Quiel, Bernd, 89269 Vöhringen (DE)

(56) Entgegenhaltungen:
- EP-A- 0 806 600
- DD-A- 279 052
- DE-A- 3 009 326
- DE-C- 19 741 035

## Beschreibung

Die Erfindung betrifft ein isoliertes Leitungsrohr, umfassend ein Innenrohr, insbesondere aus Kupfer oder einer Kupferlegierung, und einem zum Innenrohr konzentrisch angeordneten Kunststoffaußenrohr, wobei zwischen dem Innenrohr und dem Kunststoffaußenrohr eine Trennschicht angeordnet ist. Darüber hinaus ist ein Verfahren zur Herstellung eines isolierten Leitungsrohrs und dessen Verwendung vorgesehen.

In der Sanitär- und Heizungstechnik werden seit langem eine Vielzahl isolierter Leitungsverbundrohre eingesetzt, die einen äußeren, schützenden Mantel in unterschiedlicher Geometrie und Dicke aufweisen können. Üblicherweise sind Leitungsrohre dieser Art mit mediumführendem Rohr aus Metall relativ schwere, dickwandige Kupferrohre, auf die der äußere Mantel aus Kunststoff extrudiert wird. Der Kunststoffmantel dient bei der Verarbeitung des Leitungsrohres vor allem als Schutz vor äußerer Korrosion und mechanischer Belastung. Zudem kann der Mantel in bestimmten Grenzen, bei entsprechender geometrischer Ausführung, die temperaturbedingte Längenausdehnung des metallischen Innenrohres aufnehmen, ohne dass es dabei zu einer Kraftübertragung auf die umgebenden Bauteile kommt.

Eine weiterentwickelte Ausführungsform sind Rohre mit einer Trennschicht zwischen Rohr und Mantel. Diese sind aus der Druckschrift EP 0 806 600 B1 bekannt. Da die Ummantelung zur Verarbeitung der Rohre bereichsweise entfernt werden muss, wird das mediumführende Innenrohr eines Verbundrohres aus Kupfer mit einer Trennschicht aus wasserlöslichem Wachs versehen, welche das Anhaften der Dämmschicht vermeidet.

Aus der Druckschrift DD 279 052 A1 ist ein kunststoffummanteltes Stahlrohr mit einer auf der Stahlrohroberfläche aufgebrachten Schicht bekannt, die aus einem anorganischen, mineralischen Trennmittel mit Kalziumkarbonat als Hauptbestandteil besteht. Die Trennmittelschicht ist dabei lokal an den Rohrenden angebracht, um bei einem Verschweißen der Rohre das hierzu nötige Abmanteln der Kunststoffummantelung an den Enden zu begünstigen.

Ein gattungsbildendes Rohr mit dünnem Innenrohr aus Kupfer ist aus der Druckschrift DE 30 09 326 A1 bekannt. Bei diesem Verbundrohr wird in ein aus Kunststoff bestehendes Rohr ein relativ leichtes, dünnwandiges Kupferrohr bzw. eine Kupferfolie eingezogen. Derartige Rohre besitzen einen hohen Druck- und Korrosionswiderstand und sind kostengünstig infolge der Verwendung von geringen Mengen wertvollen Metalls herzustellen. Das aus einer inneren Kupferschicht gebildete Rohr hat sehr gute Dichteigenschaften, sogar im Falle eines örtlichen Bruchs der inneren Kupferschicht reicht die Ummantelung aus, um bei üblichem Druck und Temperatur Leckaschen an der Anlage zu verhindern. .

Um bei der Verarbeitung den Rohrquerschnitt an Verbindungsstellen nicht zu verengen, werden Verbundrohre mit metallischem Kernrohr durch Verbindungsteile miteinander verbunden, die über das Kernrohr aufgeschoben werden. Die Verbindungsteile können handelsübliche Löt- und Pressfittings sein. Vor dem Verbinden zweier Rohre muss das Außenrohr vom mediumführenden Kernrohr entfernt werden, um eine spätere Unterwanderung des Außenrohres durch das Medium zu vermeiden.

Nachteil derartiger Verbundrohre ist, dass bei der Entfernung des Außenrohres die Gefahr besteht, das dünne und verletzungsempfindliche Kernrohr durch den Abschälvorgang anzuritzen oder in sonstiger Weise zu beschädigen. Ebenso können verbleibende Rückstände des Außenrohres auf dem Kernrohr die Dichtheit der Verbindungsstelle nachhaltig beeinträchtigen.

Der Erfindung liegt die Aufgabe zugrunde, ein isoliertes Leitungsrohr bereitzustellen, welches ein außendichtendes Verbinden zweier Rohre ohne Gefahr der Beschädigung des metallischen, mediumführenden Kernrohres ermöglicht.

Diese Aufgabe wird mit den kennzeichnenden Merkmalen des Anspruchs 1 gelöst.

Die Erfindung geht dabei von der Überlegung aus, dass außer der Materialeinsparung auch die Installation und das Verbinden der Rohre wesentlich vereinfacht werden sollte. Insbesondere sollte ein rückstandsfreies Entfernen des Kunststoffaußenrohres ohne Beeinträchtigung des metallischen Innenrohres möglich sein. Des Weiteren sollte das Außenrohr nicht nur das Innenrohr schützen, sondern soll auch zur Stabilisierung des Rohres bei der Verarbeitung, insbesondere beim Biegen, beitragen.

Das isolierte Leitungsrohr ist dazu mit einer Trennschicht versehen, die das mediumführende Innenrohr nicht anhaftend mit dem Kunststoffaußenrohr verbindet, sondern eine konstruktive Trennung vom Außenrohr verursacht. Die Trennschicht zwischen Außen- und Innenrohr erweist sich beim nachträglichen Verbinden von Rohrstücken als besonders vorteilhaft, da hierdurch ein leichtes Entfernen des Außenrohres erzielt wird. Das verbleibende Innenrohr kann über die bekannten Verbindungstechniken, vorzugsweise Löten oder Pressen mit Stützhülse, mit anderen Rohren verbunden werden. Besonders geeignet erweist sich die außenseitige Verbindung bei sehr kleinen Innenrohrabmessungen, da durch die außenliegenden Löt- bzw. Presspassungen der Strömungsquerschnitt im Rohrinneren nicht verringert wird. Das Gewicht des Leitungsrohres wird in erster Linie durch das metallische Innenrohr bestimmt. So kann die Wanddicke des mediumführenden Innenrohres entsprechend gering gewählt werden, wodurch aufgrund des niedrigen Metallanteils das Gewicht der Leitungsrohre nahezu dem eines Kunststoffrohres entspricht.

Bei der Verarbeitung der Rohre wird an den Rohrenden ein Teil des Kunststoffaußenrohres vom Innenrohr getrennt. Durch die Trennschicht kann das Kunststoffaußenrohr vom Innenrohr mit handwerklichen Werkzeugen rückstandsfrei entfernt werden. Dies kann durch einen geringen Reibkoeffizienten zwischen Trennschicht und Innenrohr mit geringem Kraftaufwand und ohne Beschädigung des Innenrohres erfolgen. Bei der Verarbeitung hat das Außenrohr nicht nur die Aufgabe, das Innenrohr von außen gegen Korrosion zu schützen, sondern trägt auch zur Stabilisierung des Rohres beim Biegen bei. Zudem sind isolierte Leitungsrohre aufgrund des geringen Anteils an wertvollem Metall preisgünstiger herzustellen, als herkömmliche ummantelte Rohre oder Verbundrohre mit dicker Wandung. Damit ist im Vergleich zu den bekannten Leitungsrohren ein außendichtendes Verbinden der Rohre ohne Gefahr der Beschädigung des metallischen, mediumführenden Innenrohres möglich, wodurch das hierzu notwendige Entfernen des Außenrohres rückstandsfrei erfolgt und darüber hinaus die Vorteile leichter Verbundrohre aufweist. Als Werkstoff für das Innenrohr eignen sich korrosionsbeständige Metalle mit geringem Formänderungswiderstand, insbesondere eignet sich desoxidiertes Kupfer in Form von nahtlos gezogenen Rohren mit dünner Wanddicke. Auch Innenrohre aus desoxidiertem Kupfern in geschweißter Ausführung können mit sehr kleiner Wanddicken verwendet werden. Desweiteren kann der Werkstoff des Kernrohres zur Erhöhung der Druckbeständigkeit des Rohres auch aus niedriglegiertem Kupfer bestehen.

Für eine wirtschaftliche Massenfertigung von Leitungsrohren wird für die Trennschicht ein leicht zu verarbeitender Werkstoff benötigt. Vorteilhafterweise besteht die Trennschicht aus Kunststoff mit Füllstoffen, die mittels eines Extrusionsverfahrens hergestellt wird. Die Zusammensetzung der Kunststoffmischung ist vorzugsweise auf derselben Basis, wie das umgebende Außenrohr. Die Kunststoffmischung der Trennschicht hat dabei einen hohen Anteil an Füllstoffen, so dass der axiale Reißwiderstand der Schicht entsprechend vermindert ist.

Zum Entfernen des Außenrohres muss die Trennschicht an einer Sollbruchstelle aufbrechen und sich von der Kontaktfläche vom Innenrohr ablösen. Für ein einfaches Ablösen vom Innenrohr nimmt vorteilhafterweise die Sprödheit der Trennschicht über einen Gradienten radial zum Innenrohr hin zu. Der Gradient wird dabei über einen zunehmenden Anteil an Füllstoffen entsprechend eingestellt und erreicht sein Maximum an der inneren Oberfläche der Trennschicht. Weiterhin kann sich der Gradient in einer vorteilhaften Variante sprunghaft zum Innenrohr hin erhöhen.

Beim Entfernen des Außenrohres dürfen insbesondere die dünnwandigen Innenrohre keine Beschädigung erleiden. Einkerbungen oder Kratzer würden zur Materialschwächung führen und die Qualität beeinträchtigen. Um dies zu vermeiden, besteht in bevorzugter Ausführungsform die Trennschicht, insbesondere an der Kontaktfläche mit dem Innenrohr, aus Material mit geringerer Härte als die Oberfläche des Innenrohres. Je nach Legierungszusammensetzung kommen eine Anzahl geeigneter Füllstoffmaterialien in Betracht.

Vorteilhafterweise ist die Trennschicht mit Füllstoffen aus Kreide, Glimmer, Graphit, Gips, Talk, keramischen Pulvern oder spröden Kunststoffen ausgebildet.

Eine Trennung des Außenrohres vom Innenrohr erfolgt durch Anschneiden des Kunststoffes mit einer Trennvorrichtung. Die Einschneidtiefe reicht gerade bis zur Trennschicht. Um unter Berücksichtigung von Toleranzen mit der Einschneidvorrichtung das Innenrohr nicht zu beschädigen, weist die Trennschicht vorteilhafterweise eine Dicke bis maximal 0,8 mm auf.

In bevorzugter Ausführungsform weist das Innenrohr eine geringere Wanddicke zwischen 1 und 30%, vorzugsweise 5 bis 25%, in Bezug auf die Wanddicke des Kunststoffaußenrohrs auf. Mit diesen Verhältnissen werden angepasste Biegemomente und ein geringes Gewicht als wesentliche Eigenschaften für eine einfache Verarbeitbarkeit festgelegt, um ein schnelles Verlegen der Rohre zu gewährleisten. Vorteilhafterweise weist das Innenrohr bis zu einem Durchmesser von 22 mm eine Wanddicke bis maximal 0,5 mm auf. Die jeweilige minimale Wanddicke ergibt sich nach den Gegebenheiten des jeweiligen Einsatzgebietes. Vorzugsweise beträgt die Wanddicke des Innenrohres zwischen 0,3 und 0,4 mm. Zudem weist das Innenrohr bevorzugt eine verzinnte oder anderweitig beschichtete Innenoberfläche auf, um insbesondere bei Rohren geringer Wanddicke Korrosion zu vermeiden. Beschichtungen können auch aus Oxyden, Siliziumverbindungen oder weiteren metallischen Überzügen bestehen.

In bevorzugter Ausführungsform besteht das Kunststoffaußenrohr und die Kunststoffmischung der Trennschicht aus einer Mischung aus Füllstoffen, Weichmachern und Stabilisatoren auf der Basis von Polyvinylchlorid, Polyethylen, Polypropylen oder Polybuten.

Aufgabe des Außenrohres ist es, das Kernrohr hinsichtlich Druckbeständigkeit und Biegefähigkeit zu stabilisieren. In Kombination mit einer ausreichenden Formänderungsfestigkeit, ausgedrückt durch die Shore Härte A des Kunststoffes, besitzt das Außenrohr die Fähigkeit, eine Formänderung durch seitliche Ausbauchung des Innenrohres beim Biegevorgang zu verhindern.

Vorteilhafterweise weist dazu die Kunststoffmischung des Kunststoffaußenrohres eine Shore Härte A von mindestens 92 auf. Je nach Innenrohrwanddicke und Zusammensetzung erweist sich eine Kunststoffmischung mit einer Shore Härte A von mindestens 99 als besonders vorteilhaft. Das Außenrohr zeichnet sich durch eine Wanddicke aus, die vorteilhafterweise 1,0 bis 2,0 mm beträgt. Hierdurch kann ein Einknicken des Kernrohres wirkungsvoll vermieden werden, der Rohrquerschnitt wird bei der Verarbeitung durch Biegen nur unmerklich verändert.

Die auf das Verfahren zur Herstellung eines isolierten Leitungsrohres gerichtete Aufgabe wird gelöst, indem die Trennschicht auf das Innenrohr extrudiert wird. In einer alternativen Ausführungsform wird die Trennschicht auf die Innenseite des Kunststoffaußenrohres aufgebracht. Vorteilhafterweise wird vor Extrusion der Trennschicht das Innenrohr mir einer Haftvermittlerschicht versehen. Besonders geeignet sind extrudierte Trennschichten, die in radialer Richtung höhere Adhäsionskräfte zum umgebenden Außenrohr aufweisen, als der axiale Reißwiderstand der Trennschicht und die Haftung auf dem Innenrohr betragen.

Die erfindungsgemäßen Leitungsrohre finden insbesondere Verwendung in Sanitär- und Heizungsanlagen sowie in Flächenheizungen. Die dabei an die Rohre gestellten technischen Anforderungen können durch eine variable Gestaltung in ihrer Geometrie, Wanddicke sowie Gewicht entsprechend erfüllt werden.

Die auf ein Verfahren zum Entfernen des Kunststoffaußenrohres eines isolierten Leitungsrohres mit Trennschicht gerichtete Aufgabe wird gelöst, indem das Kunststoffaußenrohr mit einem Trennmesser vollständig durchtrennt und die Trennschicht nicht oder nur teilweise eingeschnitten wird. Bevorzugt wird beim Trennvorgang das Trennmesser spiralförmig im Außenrohr geführt. Nach dem Schneidvorgang wird der noch anliegende Wendelspan per Hand abgezogen, wobei die noch verbleibende Restdicke der Trennschicht durch Reißen abgetrennt wird.

Bei dieser Variante der Entfernung des Außenrohres erweist es sich als vorteilhaft, wenn das im Idealfall kreisrunde Außenrohr mit engen Toleranzen hinsichtlich Ovalität und Exzentrizität gegenüber dem Kernrohr gefertigt ist, damit das eindringende Trennmesser die verbleibende Trennschicht nicht oder nicht vollständig einschneidet.

Die mit der Erfindung erzielten Vorteile bestehen insbesondere darin, dass sich bei einem isolierten Leitungsrohr bedenkenlos das Außenrohr entfernt läßt und ohne die Gefahr, das dünne und verletzungsempfindliche Innenrohr durch den Abschälvorgang anzuritzen oder in sonstiger Weise zu beschädigen. Auf diese Weise wird eine einfache Verarbeitung mit außendichtendem Verbinden zweier Rohre ermöglicht. Ein besonderer Vorteil besteht im vollständigen Ablösen der Trennschicht vom Innenrohr, wodurch auch keine Rückstände auf dem Innenrohr verbleiben, die die Dichtheit der Verbindungsstelle beeinträchtigen könnten. Ein weiterer Vorteil der vereinfachten Trennung von Innen- und Außenrohr besteht darin, dass Abfallmaterial einfacher in seine Bestandteile zerlegt und damit getrennt recycelt werden kann. Durch die erfindungsgemäße Lösung lassen sich fertigungstechnische Abläufe wesentlich optimieren und die Wirtschaftlichkeit durch eine Preisreduzierung durch Materialerspamis steigern.

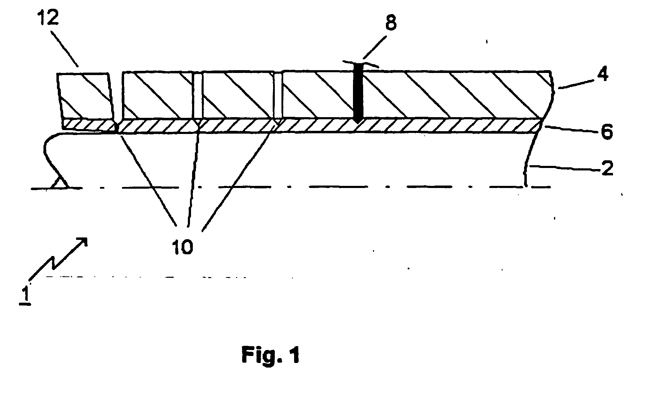

Ausführungsbeispiele der Erfindung werden anhand einer Zeichnung näher erläutert. Darin zeigt Fig. 1 ein isoliertes Leitungsrohr mit Trennschicht.

Das isolierte Leitungsrohr 1 nach Figur 1 ist aus einem Innenrohr 2, einer Trennschicht 6 und einem Kunststoffaußenrohr 4 aufgebaut. Wie im Querschnitt der Figur dargestellt, wurde mit einem Trennmesser 8 das Kunststoffaußenrohr 4 spiralförmig bis zur Trennschicht 6 angeschnitten. Die dadurch gebildeten Sollbruchstellen 10 in der Trennschicht 6 werden beim Abziehen des Wendelspanes 12 aufgerissen und dabei die Trennschicht vom Innenrohr 2 abgelöst.

### Bezugszeichenliste

- 1: Isoliertes Leitungsrohr
- 2: Innenrohr
- 4: Kunststoffaußenrohr
- 6: Trennschicht
- 8: Trennmesser
- 10: Sollbruchstelle
- 12: Wendelspan

## Patentansprüche

1. Isoliertes Leitungsrohr (1), umfassend ein Innenrohr (2) aus Kupfer oder einer Kupferlegierung, und einem zum Innenrohr (2) konzentrisch angeordneten Kunststoffaußenrohr (4), wobei das Innenrohr (2) eine geringe Wanddicke zwischen 1 und 30% in Bezug auf die Wanddicke des Kunststoffaußenrohrs (4) aufweist.
**dadurch gekennzeichnet, dass** zwischen dem Innenrohr (2) und dem Kunststoffaußenrohr eine über die gesamte Rohrlänge aufgebrachte Trennschicht (6) angeordnet ist, und dass die Trennschicht (6) spröde ausgebildet ist, wodurch beim Entfernen des Kunststoffaußenrohrs (4) die Trennschicht (6) durch Sprödbruch aufbricht.

2. Isoliertes Leitungsrohr nach Anspruch 1, **dadurch gekennzeichnet, dass** das Innenrohr (2) eine geringe Wanddicke von 5 bis 25% in Bezug auf die Wanddicke des Kunststoffaußenrohrs (4) aufweist.

3. Isoliertes Leitungsrohr nach Anspruch 1 oder 2, **dadurch gekennzeichnet, dass** die Trennschicht (6) aus Kunststoff mit Füllstoffen besteht.

4. Isoliertes Leitungsrohr nach einem der Ansprüche 1 bis 3, **dadurch gekennzeichnet, dass** die Sprödheit der Trennschicht (6) über einen Gradienten radial zum Innenrohr (2) hin zunimmt.

5. Isoliertes Leitungsrohr nach einem der Ansprüche 1 bis 4, **dadurch gekennzeichnet, dass** die Trennschicht (6), insbesondere an der Kontaktfläche mit dem Innenrohr (2), aus Material mit geringerer Härte als die Oberfläche des Innenrohrs (2) besteht.

6. Isoliertes Leitungsrohr nach einem der Ansprüche 2 bis 5, **dadurch gekennzeichnet, dass** die Trennschicht (6) mit Füllstoffen aus Kreide, Glimmer, Graphit, Gips, Talk, keramischen Pulvern oder spröden Kunststoffen ausgebildet ist.

7. Isoliertes Leitungsrohr nach einem der Ansprüche 1 bis 6, **dadurch gekennzeichnet, dass** die Trennschicht (6) eine Dicke bis maximal 0,8 mm aufweist.

8. Isoliertes Leitungsrohr nach einem der Ansprüche 1 bis 7, **dadurch gekennzeichnet, dass** das Innenrohr (2) bis zu einem Durchmesser von 22 mm eine Wanddicke bis maximal 0,5 mm aufweiset.

9. Isoliertes Leitungsrohr nach Anspruch 7 oder 8, **dadurch gekennzeichnet, dass** das Innenrohr (2) die Wanddicke zwischen 0,3 bis 0,4 mm aufweist.

10. Isoliertes Leitungsrohr nach einem der Ansprüche 1 bis 9, **dadurch gekennzeichnet, dass** das Innenrohr (2) eine verzinnte oder beschichtete Innenoberfläche aufweist.

11. Isoliertes Leitungsrohr nach einem der Ansprüche 1 bis 10, **dadurch gekennzeichnet, dass** das Kunststoffaußenrohr (4) und die Kunststoffmischung der Trennschicht aus einer Mischung aus Füllstoffen, Weichmachern und Stabilisatoren auf der Basis von Polyvinylchlorid, Polyethylen, Polypropylen oder Polybuten besteht.

12. Isoliertes Leitungsrohr nach einem der Ansprüche 1 bis 11, **dadurch gekennzeichnet, dass** die Kunststoffmischung des Kunststoffaußenrohrs (4) eine Shore Härte A von mindestens 92 aufweist.

13. Isoliertes Leitungsrohr nach einem der Ansprüche 1 bis 12, **dadurch gekennzeichnet, dass** das Kunststoffaußenrohr (4) eine Wanddicke von 1,0 bis 2,0 mm aufweist.

14. Verfahren zur Herstellung eines isolierten Leitungsrohrs nach einem der vorstehenden Ansprüche 1 bis 13, **dadurch gekennzeichnet, dass** die Trennschicht (6) auf das Innenrohr (2) extrudiert wird.

15. Verfahren zur Herstellung eines isolierten Leitungsrohrs nach Anspruch 14, **dadurch gekennzeichnet, dass** vor Extrusion der Trennschicht (6) eine Haftvermittlerschicht auf das Innenrohr (2) aufgebracht wird.

16. Verfahren zur Herstellung eines isolierten Leitungsrohrs nach einem der vorstehenden Ansprüche 1 bis 13, **dadurch gekennzeichnet, dass** die Trennschicht (6) auf die Innenseite des Kunststoffaußenrohrs (4) aufgebracht wird.

17. Verwendung eines isolierten Leitungsrohrs nach einem der vorstehenden Ansprüche 1 bis 13 in Sanitär- und Heizungsanlagen sowie für Flächenheizungen.

## Claims

1. Insulated conduit pipe (1), comprising an inner pipe (2) of copper or a copper alloy, and a plastics outer pipe (4) arranged concentrically with respect to the inner pipe (2), wherein the inner pipe (2) has a small wall thickness of from 1 to 30% in relation to the wall thickness of the plastics outer pipe (4), **characterised in that** a separating layer (6), which is applied over the entire length of the pipe, is disposed between the inner pipe (2) and the plastics outer pipe, and the separating layer (6) is constructed to be brittle whereby, on removal of the plastics outer pipe (4), the separating layer (6) breaks by brittle fracture.

2. Insulated conduit pipe according to claim 1, **characterised in that** the inner pipe (2) has a small wall thickness of from 5 to 25% in relation to the wall thickness of the plastics outer pipe (4).

3. Insulated conduit pipe according to claim 1 or 2, **characterised in that** the separating layer (6) consists of plastics material with fillers.

4. Insulated conduit pipe according to any one of claims 1 to 3, **characterised in that** the brittleness of the separating layer (6) increases over a gradient radially towards the inner pipe (2).

5. Insulated conduit pipe according to any one of claims 1 to 4, **characterised in that** the separating layer (6) consists, especially at the contact surface with the inner pipe (2), of a material of lower hardness than the surface of the inner pipe (2).

6. Insulated conduit pipe according to any one of claims 2 to 5, **characterised in that** the separating layer (6) is formed with fillers consisting of chalk, mica, graphite, gypsum, talcum, ceramic powders or brittle plastics materials.

7. Insulated conduit pipe according to any one of claims 1 to 6, **characterised in that** the separating layer (6) has a thickness of up to 0.8 mm maximum.

8. Insulated conduit pipe according to any one of claims 1 to 7, **characterised in that** the inner pipe (2) has, up to a diameter of 22 mm, a wall thickness of up to 0.5 mm maximum.

9. Insulated conduit pipe according to claim 7 or 8, **characterised in that** the inner pipe (2) has a wall thickness of from 0.3 to 0.4 mm.

10. Insulated conduit pipe according to any one of claims 1 to 9, **characterised in that** the inner pipe (2) has a tin-plated or coated inner surface.

11. Insulated conduit pipe according to any one of claims 1 to 10, **characterised in that** the plastics outer pipe (4) and the plastics mixture of the separating layer consist of a mixture of fillers, plasticizers and stabilisers based on polyvinyl chloride, polyethylene, polypropylene or polybutylene.

12. Insulated conduit pipe according to any one of claims 1 to 11, **characterised in that** the plastics mixture of the plastics outer pipe (4) has a Shore A hardness of at least 92.

13. Insulated conduit pipe according to any one of claims 1 to 12, **characterised in that** the plastics outer pipe (4) has a wall thickness of from 1.0 to 2.0 mm.

14. Process for the manufacture of an insulated conduit pipe according to any one of the preceding claims 1 to 13, **characterised in that** the separating layer (6) is extruded onto the inner pipe (2).

15. Process for the manufacture of an insulated conduit pipe according to claim 14, **characterised in that** an adhesion promoter layer is applied to the inner pipe (2) prior to extrusion of the separating layer (6).

16. Process for the manufacture of an insulated conduit pipe according to any one of the preceding claims 1 to 13, **characterised in that** the separating layer (6) is applied to the inside of the plastics outer pipe (4).

17. Use of an insulated conduit pipe according to any one of the preceding claims 1 to 13 in sanitary and heating installations and for surface heating systems.

## Revendications

1. Tube de conduite (1) isolé comprenant un tube intérieur (2) en cuivre ou en un alliage de cuivre, et un tube extérieur (4) en matière plastique agencé concentriquement au tube intérieur (2), le tube intérieur (2) présentant une faible épaisseur de paroi entre 1 et 30% relativement à l'épaisseur de paroi du tube extérieur (4) en matière plastique,
**caractérisé en ce qu'**entre le tube intérieur (2) et le tube extérieur en matière plastique, est agencée une couche de séparation (6) appliquée sur la totalité de la longueur du tube, et **en ce que** la couche de séparation (6) est d'une configuration fragile, ce qui lors de l'enlèvement de la couche extérieure (4) en matière plastique, conduit à la rupture de la couche de séparation (6) par rupture de fragilité.

2. Tube de conduite isolé selon la revendication 1, **caractérisé en ce que** le tube intérieur (2) présente une faible épaisseur de paroi entre 5 et 25% relativement à l'épaisseur de paroi du tube extérieur (4) en matière plastique.

3. Tube de conduite isolé selon la revendication 1 ou 2, **caractérisé en ce que** la couche de séparation (6) est constituée de matière plastique renfermant des substances de charge.

4. Tube de conduite isolé selon l'une des revendications 1 à 3, **caractérisé en ce que** la fragilité de la couche de séparation (6) augmente selon un gradient, radialement en direction du tube intérieur (2).

5. Tube de conduite isolé selon l'une des revendications 1 à 4, **caractérisé en ce que** la couche de séparation (6) est constituée, notamment au niveau de la surface de contact avec le tube intérieur (2), en un matériau d'une dureté moindre que celle de la surface extérieure du tube intérieur (2).

6. Tube de conduite isolé selon l'une des revendications 2 à 5, **caractérisé en ce que** la couche de séparation (6) est réalisée avec des substances de charge formées de craie, mica, graphite, plâtre, stéatite, de poudres céramiques ou de matières plastiques fragiles.

7. Tube de conduite isolé selon l'une des revendications 1 à 6, **caractérisé en ce que** la couche de séparation (6) présente une épaisseur d'au maximum 0,8 mm.

8. Tube de conduite isolé selon l'une des revendications 1 à 7, **caractérisé en ce que** le tube intérieur (2), jusqu'à un diamètre de 22 mm, présente une épaisseur de paroi maximale de 0,5 mm.

9. Tube de conduite isolé selon la revendication 7 ou 8, **caractérisé en ce que** le tube intérieur (2) présente l'épaisseur de paroi de 0,3 à 0,4 mm.

10. Tube de conduite isolé selon l'une des revendications 1 à 9, **caractérisé en ce que** le tube intérieur (2) présente une surface intérieure étamée ou revêtue.

11. Tube de conduite isolé selon l'une des revendications 1 à 10, **caractérisé en ce que** le tube extérieur (4) en matière plastique et le mélange de matière plastique de la couche de séparation sont constitués d'un mélange de substances de charge, de plastifiants et de stabilisateurs sur une base de chlorure de polyvinyle, polyéthylène, polypropylène ou polybutène.

12. Tube de conduite isolé selon l'une des revendications 1 à 11, **caractérisé en ce que** le mélange de matières plastiques du tube extérieur (4) en matière plastique présente une dureté Shore A d'au moins 92.

13. Tube de conduite isolé selon l'une des revendications 1 à 12, **caractérisé en ce que** le tube extérieur (4) en matière plastique présente une épaisseur de paroi de 1,0 à 2,0 mm.

14. Procédé de fabrication d'un tube de conduite isolé selon l'une des revendications 1 à 13, **caractérisé en ce que** la couche de séparation (6) est extrudée sur le tube intérieur (2).

15. Procédé de fabrication d'un tube de conduite isolé, selon la revendication 14, **caractérisé en ce qu'**avant l'extrusion de la couche de séparation (6), on applique une couche d'un agent d'adhésivité sur le tube intérieur (2).

16. Procédé de fabrication d'un tube de conduite isolé selon l'une des revendications précédentes 1 à 13, **caractérisé en ce que** la couche de séparation (6) est appliquée sur le côté intérieur du tube extérieur (4) en matière plastique.

17. Utilisation d'un tube de conduite isolé selon l'une des revendications précédentes 1 à 13, dans des installations sanitaires et des installations de chauffage, ainsi que dans des systèmes de chauffage par grandes surfaces.
